# EUROPÄISCHE PATENTSCHRIFT

(11) **EP 4 146 900 B1**
(45) Veröffentlichungstag und Bekanntmachung des Hinweises auf die Patenterteilung: **24.07.2024**
(21) Anmeldenummer: 21726341.7
(22) Anmeldetag: 06.05.2021
(51) Int. Cl.: E21B 4/02, E21B 7/06, E21B 4/18

(54) **BOHRTURBINE UND VERFAHREN ZUM RICHTBOHREN**
DRILLING TURBINE AND METHOD FOR DIRECTIONAL DRILLING
TURBINE DE FORAGE ET PROCÉDÉ DE FORAGE DIRECTIONNEL

(30) Priorität: 07.05.2020 DE 102020205764; 05.03.2021 DE 102021105398
(43) Veröffentlichungstag der Anmeldung: 15.03.2023
(73) Patentinhaber: Fraunhofer-Gesellschaft zur Förderung der angewandten Forschung e.V., 80686 München (DE)
(72) Erfinder: GEISSLER, Niklas, 44801 Bochum (DE)
(86) Internationale Anmeldenummer: PCT/EP2021/061992
(87) Internationale Veröffentlichungsnummer: WO 2021/224391

(56) Entgegenhaltungen:
- CN-A- 108 086 912
- CN-A- 110 500 041
- US-A- 2 521 976
- US-A- 4 333 539
- US-A1- 2019 264 544
- US-A1- 2019 338 609

## Beschreibung

Die Erfindung betrifft eine Bohrturbine mit einem Gehäuse, in welchem eine Antriebswelle drehbar gelagert ist, und mit einem Turbinenlaufrad, welches dazu eingerichtet ist, die Antriebswelle in Rotation zu versetzen, wobei die Antriebswelle mit einem Bohrwerkzeug verbindbar ist, und wobei das Gehäuse zumindest eine Antriebsleitung mit zumindest einer Antriebsmündung aufweist, durch welche ein Antriebsfluid auf das Turbinenlaufrad lenkbar ist. Weiterhin betrifft die Erfindung ein Verfahren zum Richtbohren.

Aus der US 4, 333, 539 ist eine solche Bohrturbine und ein solches Verfahren bekannt. Diese bekannte Bohrturbine weist eine Druckluftturbine auf, welche über ein Reduktionsgetriebe ein Bohrwerkzeug antreibt.

Diese bekannte Bohrturbine weist den Nachteil einer großen Baulänge auf, so dass Richtbohrungen nur mit einem großen Mindestradius angelegt werden können. Weiterhin ist der Einsatz in tiefen, wassergefüllten Bohrungen aufgrund des hydrostatischen Drucks schwierig oder unmöglich.

Eine weitere Bohrturbine ist aus der CN 110 500 041 A bekannt.

Ausgehend vom Stand der Technik liegt der Erfindung daher die Aufgabe zugrunde, eine Bohrturbine und ein Verfahren zum Richtbohren anzugeben, welches enge Mindestradien ermöglicht und auch in wasserführenden Gesteinsschichten anwendbar ist. Weiterhin liegt der Erfindung die Aufgabe zugrunde, eine Bohrturbine und ein Verfahren zum Richtbohren anzugeben, welches für Hartgestein geeignet ist.

Die Aufgabe wird erfindungsgemäß durch eine Bohrturbine gemäß Anspruch 1 und ein Verfahren nach Anspruch 11 gelöst.

Vorteilhafte Weiterbildungen der Erfindung finden sich in den Unteransprüchen.

Erfindungsgemäß wird eine Bohrturbine mit einem Gehäuse vorgeschlagen. Das Gehäuse kann aus einem Metall oder einer Legierung oder aus Kunststoff, insbesondere faserverstärkten Kunststoffen bestehen. Das Gehäuse kann durch Urformen und/oder spanende Bearbeitung hergestellt sein. Das Gehäuse kann eine zylindrische Grundform aufweisen. Im Gehäuse können mehrere Leitungen bzw. Fluidkanäle ausgebildet sein, um ein zugeführtes Antriebsfluid an vorgebbare Stellen innerhalb des Gehäuses zu transportieren bzw. durch verschiedene, an vorgebbaren Stellen angeordnete Öffnungen austreten zu lassen.

Im Gehäuse ist zumindest eine Antriebswelle drehbar gelagert. Auch die Antriebswelle kann aus einem Metall oder einer Legierung durch Urformen und/oder spanende Bearbeitung hergestellt sein. Die Antriebswelle kann in an sich bekannter Weise ausgewuchtet sein, um einen ruhigen Lauf im Gehäuse zu ermöglichen und Vibrationen zu vermeiden oder zu reduzieren. Die Lagerung der Antriebswelle kann mittels eines Wälzlagers oder eines Gleitlagers oder eines hydrodynamischen Lagers erfolgen.

Weiterhin enthält die erfindungsgemäße Bohrturbine zumindest ein Turbinenlaufrad, welches dazu eingerichtet ist, die Antriebswelle in Rotation zu versetzen. Hierzu kann das Turbinenlaufrad mit der Antriebswelle gefügt werden, beispielsweise durch Klebung und/oder Lötung und/oder Schweißung und/oder Klemmung. Das Turbinenlaufrad kann aus einem Metall oder einer Legierung oder aus Kunststoff, insbesondere faserverstärkten Kunststoffen hergestellt sein. Das Turbinenlaufrad kann einstückig gefertigt sein, beispielsweise durch Fräsen oder Laminieren. Dadurch können Unwuchten verringert und/oder die Festigkeit erhöht sein. In anderen Ausführungsformen der Erfindung kann das Turbinenlaufrad mehrteilig ausgeführt sein, wobei die einzelnen Bestandteile zur Endmontage gefügt werden. Dies kann die Reparatur bzw. die Wartung erleichtern.

Weiterhin wird vorgeschlagen, die Antriebswelle im Betrieb der Bohrturbine mit einem Bohrwerkzeug zu verbinden. Das Bohrwerkzeug kann ausgewählt sein aus einem Fräser oder einem Bohrmeißel oder einem Schleifwerkzeug. Das Bohrwerkzeug kann aus einem Metall oder einer Legierung gefertigt sein. Das Bohrwerkzeug kann mit einer optionalen Hartstoffbeschichtung versehen sein, beispielsweise TiN oder DLC oder Diamant. Das Bohrwerkzeug kann in einigen Ausführungsformen der Erfindung unmittelbar mit der Antriebswelle verbunden sein oder die Antriebswelle kann den Schaft oder einen Teil des Schaftes des Bohrwerkzeuges bilden. In anderen Ausführungsformen der Erfindung kann das Bohrwerkzeug über ein Spannwerkzeug mit der Antriebswelle verbunden sein. In wiederum anderen Ausführungsformen der Erfindung kann das Bohrwerkzeug auf dem Turbinenlaufrad befestigt sein.

In einigen Ausführungsformen der Erfindung sind sämtliche Bauteile der Bohrturbine aus temperaturbeständigen Materialien gefertigt und es sind beispielsweise keine Elastomere verbaut. Dadurch entsteht der Vorteil, dass die Bohrturbine auch bei sehr hohen Einsatztemperaturen betrieben werden kann, beispielsweise in geothermischen Reservoiren.

In einigen Ausführungsformen der Erfindung kann ein Spannwerkzeug vorhanden sein, welches mit der Antriebswelle verbunden ist und in welches das Bohrwerkzeug aufgenommen wird. Hierdurch kann ein schneller Wechsel des Bohrwerkzeuges erfolgen.

Schließlich weist das Gehäuse zumindest eine Antriebsleitung auf. Ein erstes Ende der Antriebsleitung ist als Antriebsmündung ausgebildet oder mit zumindest einer Antriebsmündung versehen. Bei Betrieb der Bohrturbine kann der Antriebsleitung ein Antriebsfluid über das gegenüberliegende zweite Ende zugeführt werden. Das Antriebsfluid verlässt die Antriebsleitung über die Antriebsmündung und wird auf das Turbinenlaufrad gelenkt, so dass das Turbinenlaufrad ein Antriebsdrehmoment an der Antriebswelle erzeugt. Die Antriebsmündung kann als frei ausblasendes Rohrende ausgeführt sein. Hierdurch kann die Bohrturbine besonders einfach aufgebaut sein. In anderen Ausführungsformen der Erfindung kann die Antriebsmündung eine Düse enthalten oder daraus bestehen, deren Geometrie so ausgestaltet ist, dass die Strömungsgeschwindigkeit und/oder der Strahldurchmesser und/oder die Strahlgeometrie des austretenden Antriebsfluides an vorgebbare Sollwerte angepasst wird.

Erfindungsgemäß wird vorgeschlagen, das Turbinenlaufrad unmittelbar mit der Antriebswelle zu verbinden. Ebenso ist das Bohrwerkzeug bzw. das Spannwerkzeug zur Aufnahme des Bohrwerkzeuges unmittelbar mit der Antriebswelle verbunden, so dass im Betrieb das Turbinenlaufrad und die Antriebswelle und das Bohrwerkzeug mit derselben Drehzahl rotieren. Dieses Merkmal hat die Wirkung, dass gegenüber bekannten Bohrturbinen die Drehzahl erhöht und das Drehmoment verringert ist. Aufgrund der hohen Drehzahl und des geringen Drehmoments eignen sich Schneidwerkzeuge mit schleifendem bzw. schabendem Gesteinszerstörungsmechanismus und geringer Meißelaggressivität. Dadurch muss nur ein geringes Drehmoment auf die Antriebswelle aufgebracht werden, um das Bohrwerkzeug zu drehen. Dadurch fällt beim Bohrprozess sehr feines Bohrklein an, sodass sich nach Durchmischung mit dem rückströmenden Antriebsfluid eine Suspension bildet. Zudem bildet sich ein Bohrloch mit gleichmäßiger und geradliniger Bohrlochwand aus. Beides wirkt sich vorteilhaft auf den Abtransport des Bohrkleins aus der Bohrung aus. Da der Bohrmeißel direkt mit dem Turbinenlaufrad ohne ein zwischengeschaltetes Getriebe verbunden ist, kann die Bohrturbine sehr klein und kompakt gebaut werden. Dies ermöglicht einen kleinen Ablenkradius der Bohrung. Zudem entstehen keine mechanischen Verluste oder Schwachstellen über ein etwaiges Getriebe.

Erfindungsgemäß weist das Gehäuse eine Länge von etwa 3 cm bis etwa 15 cm und/oder einen Durchmesser von etwa 3 cm bis etwa 7,5 cm auf. Die kompakten Außenmaße ermöglichen enge Führungsradien, so dass auch aus vergleichsweise kleinen vertikalen Bohrungen mit beispielsweise etwa 10 cm bis etwa 15 cm oder etwa 10 cm bis etwa 25 cm Durchmesser heraus Richtbohrungen unter einem Winkel von etwa 30° bis etwa 90° oder etwa 35° bis etwa 60° ausgeführt werden können.

In einigen Ausführungsformen der Erfindung ist die Bohrturbine als Gleichdruckturbine ausgelegt. Eine Turbine mit Gleichdruckbeschaufelung kann im Vergleich zu anderen Turbinen ein größeres Losreißmoment besitzen. Dadurch verringert sich die Gefahr, dass sich das Bohrwerkzeug beim Bohrprozess verklemmt. Ein weiterer Vorteil kann darin bestehen, dass der Turbinenantrieb sehr kompakt gebaut werden kann.

In einigen Ausführungsformen der Erfindung kann die Bohrturbine mit Recyclingwasser betrieben werden. Hierzu wird das aus der Bohrturbine austretende Antriebsfluid aufgefangen, von Bohrklein und Verunreinigungen gereinigt und über eine Pumpe als Recyclingwasser erneut der Bohrturbine zugeführt. Die Reinigung kann über zumindest einen Feststoffabscheider und/oder zumindest eine Filterlage und/oder zumindest einen Zyklonabscheider und/oder über zumindest ein Absetzbecken erfolgen.

In einigen Ausführungsformen der Erfindung ist das Gehäuse der Bohrturbine mit einer Mehrzahl von Führungskufen versehen. Hierdurch kann ein einfacher Vorschub der Bohrturbine durch das Bohrloch ermöglicht werden und/oder die Richtungsstabilität bei der Bohrung erhöht sein.

In einigen Ausführungsformen der Erfindung kann die Mehrzahl von Führungskufen zwischen etwa 3 und etwa 8 Führungskufen gewählt sein. Dies ermöglicht eine stabile Führung bei geringen Kontaktflächen, so dass die Vorschubkräfte reduziert sein können.

In einigen Ausführungsformen der Erfindung sind die Außenflächen der Führungskufen auf einer Einhüllenden angeordnet, deren Durchmesser in etwa dem Durchmesser des Bohrwerkzeuges entspricht. In einigen Ausführungsformen der Erfindung kann der Durchmesser der Einhüllenden zwischen etwa 0% und etwa 5% geringer sein als der Durchmesser des Bohrwerkzeuges. Dies kann das Verklemmen der Bohrturbine im Bohrloch vermeiden oder reduzieren.

In einigen Ausführungsformen der Erfindung weist das Gehäuse eine einzige Zufuhrleitung auf, welche mit einer zweiten Schlauchkupplung versehen ist. Die zweite Schlauchkupplung kann als Schnellkupplung ausgeführt sein, um einen raschen Wechsel im Feld zu ermöglichen. Hierdurch können Leitungen unterschiedlicher Länge und/oder unterschiedlichen Durchmessers angeschlossen werden, um die Bohrturbine für unterschiedliche Einsatzbedingungen anzupassen.

In einigen Ausführungsformen der Erfindung kann die im Gehäuse angeordnete Zufuhrleitung in eine Mehrzahl von Unterzufuhrleitungen aufgeteilt sein. Hierdurch kann das Antriebsfluid so im Gehäuse verteilt werden, dass jeweils dort ein Teilstrom zur Verfügung steht, wo dieser benötigt wird. Gleichzeitig kann die Bohrturbine an eine zentrale Versorgungsleitung angeschlossen werden, welche eine einfache Handhabung ermöglicht.

In einigen Ausführungsformen der Erfindung ist zumindest eine Unterzufuhrleitung an zumindest eine Antriebsleitung angeschlossen. Hierdurch können mehrere Antriebsleitungen bzw. mehrere Antriebsmündungen entlang des Umfangs des Gehäuses angeordnet sein, welche einen redundanten und gleichmäßigen Fluss des Antriebsmittels erzeugen. Hierdurch kann die Betriebssicherheit der Bohrturbine und/oder das Drehmoment an der Antriebswelle erhöht sein und/oder die Leistungsabgabe gleichmäßiger sein.

In einigen Ausführungsformen der Erfindung ist an zumindest eine Unterzufuhrleitung zumindest eine Rückschubleitung angeschlossen. In einigen Ausführungsformen der Erfindung mündet die Rückschubleitung an zumindest einer Rückschuböffnung, welche an dem dem Bohrwerkzeug entgegengesetzten Ende des Gehäuses angeordnet ist. Dies ermöglicht einen gleichmäßigen Vorschub der Bohrturbine, so dass diese eine Richtbohrung mit dem gewünschten Verlauf erzeugen kann. Die Rückschuböffnung kann als frei ausblasendes Rohrende ausgeführt sein. Hierdurch kann die Bohrturbine besonders einfach aufgebaut sein. In anderen Ausführungsformen der Erfindung kann die Rückschuböffnung eine Düse enthalten oder daraus bestehen, deren Geometrie so ausgestaltet ist, dass die Strömungsgeschwindigkeit und/oder der Strahldurchmesser und/oder die Strahlgeometrie und/oder die Strahlrichtung des austretenden Antriebsfluides an vorgebbare Sollwerte angepasst wird. Hierdurch kann eine Steuerung der Bohrturbine beim Vorschub erreicht werden und/oder das durch die Schneidkräfte auf das Gehäuse einwirkende Drehmoment abgetragen werden. Durch leicht schräg nach außen gekippte Düsenausrichtung kann die Bohrturbine stabilisiert werden.

In einigen Ausführungsformen der Erfindung weist das Gehäuse zumindest eine erste Zufuhrleitung und zumindest eine zweite Zufuhrleitung auf. In einigen Ausführungsformen der Erfindung können die erste Zufuhrleitung und die zweite Zufuhrleitung konzentrisch zueinander angeordnet sein. In diesem Fall kann die Bohrturbine über eine Zuleitung mit Antriebsfluid versorgt werden, welche eine Innenleitung und eine diese umgebende Außenleitung aufweist. Diese Merkmale haben die Wirkung, dass die den Rückschubleitungen zugeführte Fluidmenge und die den Antriebsleitungen zugeführte Fluidmenge getrennt voneinander gesteuert oder geregelt werden können. Dadurch können die Vorschubkraft und das Antriebsdrehmoment getrennt voneinader eingestellt werden.

In einigen Auführungsformen der Erfindung können mehrere erste Zufuhrleitungen vorhanden sein, um auf diese Weise Druck und/oder Menge des Antriebsfluides in unterschiedlichen Rückschubleitungen mit jeweils zumindest einer Rückschuböffnung getrennt voneinander einstellen zu können. Hierdurch kann die Vorschubrichtung der erfindungsgemäßen Bohrturbine während des Bohrvorgangs beeinflusst werden.

In einigen Ausführungsformen der Erfindung weist die Antriebsleitung zumindest einen Längsabschnitt auf, welcher zur Längsachse der Bohrturbine einen Winkel von etwa 20° bis etwa 70° einschließt. In anderen Ausführungsformen der Erfindung weist die Antriebsleitung zumindest einen Längsabschnitt auf, welcher zur Längsachse der Bohrturbine einen Winkel von etwa 30° bis etwa 60° einschließt. In wiederum anderen Ausführungsformen der Erfindung weist die Antriebsleitung zumindest einen Längsabschnitt auf, welcher zur Längsachse der Bohrturbine einen Winkel von etwa 45° einschließt. In einigen Ausführungsformen der Erfindung ist das Turbinenlaufrad mit einer Mehrzahl von Prallelementen versehen, welche jeweils eine Prallfläche besitzen. Die Antriebsleitung kann zumindest einen Längsabschnitt aufweisen, welcher in etwa parallel zum Normalenvektor der Prallflächen verläuft. Hierdurch kann das erzeugte Drehmoment und/oder die Drehzahl vergrößert sein.

In einigen Ausführungsformen der Erfindung können die Prallelemente gekrümmte Prallflächen aufweisen. Die Krümmung kann an der dem Strahl zugewandten Seite konkav sein. Hierdurch kann der Wirkungsgrad der Gleichdruckturbine gegenüber ebenen Prallflächen gesteigert werden.

In einigen Ausführungsformen der Erfindung weist das Gehäuse zumindest eine Lagerkammer auf, welche zumindest ein Kugellager für die Antriebswelle enthält. Die Lagerung durch zumindest ein Kugellager weist den Vorteil eines geringen Reibwiderstandes auch bei hohen Drehzahlen und bei hohen in axialer Richtung wirkenden Kräften auf. Weiterhin sind Kugellager als Verschleißteil kostengünstig austauschbar.

In einigen Ausführungsformen der Erfindung kann die Antriebswelle mit zumindest einem Hydrolager und/oder zumindest einem Gleitlager im Gehäuse gelagert sein.

In einigen Ausführungsformen der Erfindung weist das Gehäuse zumindest eine Lagerkammer und zumindest eine Verbindungsleitung auf, wobei die Verbindungsleitung von der Zufuhrleitung und/oder einer Unterzufuhrleitung ausgehend in die Lagerkammer mündet. Hierdurch kann der Lagerkammer ein Teil des Antriebsfluides zugeführt werden. Diese Ausführungsform weist den Vorteil auf, dass in einfacher Weise eine gute Schmierung und Kühlung der Lager ermöglicht wird. Weiterhin kann auf eine Abdichtung der Lagerkammer verzichtet werden, da Bohrklein gegen den Strom des Antriebsfluides nicht in die Lagerkammer eingetragen werden kann bzw. vom Antriebsfluid aus der Lagerkammer ausgetragen wird. Somit werden Reibungsverluste durch eine Abdichtung vermieden.

In einigen Ausführungsformen der Erfindung kann die Antriebswelle zumindest eine Hohlbohrung aufweisen. Diese kann mit zumindest einer Spülöffnung verbunden sein, durch welche bei Betrieb der Bohrturbine ein Fluid an eine Stirnfläche des Bohrwerkzeuges geleitet werden kann. Dies ermöglicht die Schmierung und/oder Kühlung des Bohrwerkzeuges und den Abtransport des entstehenden Bohrkleins, so dass ein rascher Vortrieb bei langer Standzeit des Bohrwerkzeuges ermöglicht werden kann.

In einigen Ausführungsformen der Erfindung weist das Gehäuse einen Durchmesser von etwa 3 cm bis etwa 7,5 cm auf. In anderen Ausführungsformen der Erfindung weist das Gehäuse einen Durchmesser von etwa 2,5 cm bis etwa 4,5 cm auf.

In einigen Ausführungsformen der Erfindung weist das Gehäuse eine Länge von etwa 3 cm bis etwa 7 cm auf. In anderen Ausführungsformen der Erfindung weist das Gehäuse eine Länge von etwa 4 cm bis etwa 6 cm auf. Die kompakten Außenmaße ermöglichen enge Führungsradien, so dass auch aus vergleichsweise kleinen vertikalen Bohrungen mit beispielsweise etwa 10 cm bis etwa 15 cm oder etwa 10 cm bis etwa 25 cm Durchmesser heraus Richtbohrungen unter einem Winkel von etwa 30° bis etwa 90° oder etwa 35° bis etwa 60° ausgeführt werden können.

In einigen Ausführungsformen der Erfindung weist das Turbinenlaufrad und/oder ein Spannwerkzeug und/oder das Bohrwerkzeug eine Unwucht auf. Da die Schnittgeschwindigkeit eines rotierenden Bohrwerkzeuges mit zunehmenden Abstand von der Drehachse zunimmt, wird vermieden, dass der Mittelpunkt des Bohrwerkzeuges stets an der selben Stelle im Gestein positioniert ist. Der Abtrag kann dadurch vergrößert sein.

In einigen Ausführungsformen der Erfindung weist das Turbinenlaufrad und/oder ein Spannwerkzeug und/oder das Bohrwerkzeug zumindest eine Öffnung auf, in welche zumindest ein Gewicht aufnehmbar ist. Dies ermöglicht das Einstellen einer Unwucht, indem Gewichte unterschiedlicher Masse in unterschiedliche Öffnungen eingelegt werden. Die Öffnung kann einen polygonalen oder runden Querschnitt aufweisen. Die Öffnung kann als Ringnut ausgeführt sein, in welche ein ringförmiges Gewicht eingebracht werden kann. Hierzu kann das Gewicht inhomogen sein oder die Ringnut kann außermittig eingebracht werden.

In einigen Ausführungsformen der Erfindung kann das Gewicht eine Masse von etwa 0,1 g bis etwa 10 g aufweisen. In anderen Ausführungsformen der Erfindung kann das Gewicht eine Masse von etwa 0,5 g bis etwa 3 g aufweisen. In einigen Ausführungsformen der Erfindung kann das Gewicht eine Masse von etwa 10 g bis etwa 100 g aufweisen. In anderem Ausführungsformen der Erfindung kann das Gewicht eine Masse von etwa 15 g bis etwa 50 g aufweisen. In wiederum anderem Ausführungsformen der Erfindung kann das Gewicht eine Masse von etwa 10 g bis etwa 20 g aufweisen. Der genannte Massenbereich erlaubt das Erzeugen einer Unwucht, welche einerseits hinreichend groß ist, um einen effizienten Vorschub und andrerseits noch eine Kontrolle der Bohrturbine zu ermöglichen

Erfindungsgemäß wird weiterhin ein Verfahren zum Richtbohren vorgeschlagen, bei welchem eine vorstehend beschriebene Bohrturbine verwendet wird. Unter einer Richtbohrung wird für die Zwecke der vorliegenden Beschreibung eine Tiefbohrung verstanden, deren Richtung beeinflusst wird. Im einfachsten Fall wird hierdurch sichergestellt, dass die Bohrung von der Erdoberfläche ausgehend senkrecht verläuft. In weiteren Ausführungen der Erfindung kann die Bohrung in eine gewünschte Richtung ausgeführt werden. Beispielsweise kann eine Bohrung ausgehend von einer vertikal verlaufenden Bohrung nahezu horizontal abzweigen. Hierdurch können Lagerstätten gezielt erreicht werden oder neue Wegsamkeiten geschaffen werden, welche die Schüttung der Bohrung verbessern. Das erfindungsgemäße Verfahren kann beispielsweise zur Nutzung der Geothermie, zum Brunnenbau oder zur Ölförderung eingesetzt werden.

In einigen Ausführungsformen der Erfindung kann die Richtbohrung von einer ersten Bohrung ausgehend durchgeführt werden. Die erste Bohrung kann in einigen Ausführungsformen verrohrt sein. Die erste Bohrung kann in einigen Ausführungsformen einen größeren Durchmesser aufweisen als die Richtbohrung. Die erste Bohrung kann einen Durchmesser zwischen etwa 8 cm und etwa 22 cm aufweisen. In einigen Ausführungsformen der Erfindung kann die Bohrturbine in die erste Bohrung bis zu einer vorgebbaren Stelle eingeführt und dort mittels eines Ablenkschuhs in einem vorgebbaren Winkel zur Wandung der ersten Bohrung ausgerichtet werden. In einigen Ausführungsformen der Erfindung wird zum Durchbohren einer Verrohrung der ersten Bohrung ein erstes Bohrwerkzeug eingesetzt und zum Vortrieb der Richtbohrung ein zweites Bohrwerkzeug. Das erste Bohrwerkzeug kann ein Fräskopf zur Metallbearbeitung sein und das zweite Bohrwerkzeug kann ein Bohrmeißel zum Herstellen einer kleinkalibrigen Richtbohrung in Hartgestein sein. In anderen Ausführungsformen der Erfindung wird zum Durchbohren der Verrohrung und zum Vortrieb der Richtbohrung das identische Bohrwerkzeug eingesetzt.

In einigen Ausführungsformen der Erfindung wird zum Durchbohren einer Verrohrung der ersten Bohrung die erfindungsgemäße Bohrturbine eingesetzt. Das Auffahren der kleinkalibrigen Richtbohrung kann dann auch mit einem anderen, bekannten Verfahren erfolgen. In anderen Ausführungsformen der Erfindung wird zum Durchbohren einer Verrohrung der ersten Bohrung ein bekanntes Verfahren eingesetzt. Sofern die Vertikalbohrung keine Verrohrung aufweist, kann der Verfahrensschritt des Durchbohrens der Verrohrung auch entfallen. Im Anschluss daran erfolgt das Auffahren der kleinkalibrigen Richtbohrung mit der erfindungsgemäßen Bohrturbine wie vorstehend beschrieben.

In einigen Ausführungsformen der Erfindung wird zum Betrieb der Bohrturbine ein inkompressibles Fluid als Antriebsfluid verwendet. Hierdurch ist der Betrieb auch möglich, wenn die Bohrturbine vollständig in Flüssigkeit eingetaucht ist.

In einigen Ausführungsformen der Erfindung kann das Antriebsfluid Wasser enthalten oder daraus bestehen. Dies ermöglicht einen Betrieb im Brunnenbau oder in geothermischen Reservoiren ohne Verschmutzungen einzubringen.

In einigen Ausführungsformen der Erfindung kann das Antriebsfluid mit einem Druck von etwa 80 bar bis etwa 200 bar zugeführt werden. In anderen Ausführungsformen der Erfindung kann das Antriebsfluid mit einem Druck von etwa 100 bar bis etwa 160 bar zugeführt werden. In einigen Ausführungsformen der Erfindung dass das Antriebsfluid mit einem Durchfluss von etwa 80 l/min bis etwa 300 l/min zugeführt werden. In anderen Ausführungsformen der Erfindung kann das Antriebsfluid mit einem Durchfluss von etwa 150 l/min bis etwa 250 l/min zugeführt werden. Dieser Druck kann auch durch vergleichsweise geringe Schlauchdurchmesser über große Entfernungen von mehr als 150 m oder mehr als 500 m oder mehr als 1000 m oder mehr als 3000 m der Bohrturbine zugeführt werden, so dass die sich aus dem Produkt von Druck und Durchfluss ergebende Antriebsleistung auch bei großen Bohrlochtiefen zuverlässig zugeführt werden kann.

In einigen Ausführungsformen der Erfindung kann die Antriebswelle und das Bohrwerkzeug im Betrieb mit einer Drehzahl von etwa 15.000 min⁻¹ bis etwa 35.000 min⁻¹ rotieren. In anderen Ausführungsformen der Erfindung kann die Antriebswelle und das Bohrwerkzeug im Betrieb mit einer Drehzahl von etwa 20.000 min⁻¹ bis etwa 30.000 min⁻¹ rotieren. Die Drehzahl im Betrieb des Bohrwerkzeugs stellt sich aus dem Momentengleichgewicht zwischen dem vom Turbinenlaufrad aufgebrachten Antriebsmoment und dem durch die Schnittkräfte des Bohrwerkzeuges erzeugten Gegenmoment ein. In einigen Ausführungsformen der Erfindung kann die Leerlaufdrehzahl der Bohrturbine zwischen etwa 50.000 min⁻¹ und etwa 100.000 min⁻¹ betragen.

In einigen Ausführungsformen der Erfindung kann an der Antriebswelle und dem Bohrwerkzeug ein Drehmoment von etwa 0,5 Nm bis etwa 5 Nm erzeugt werden. In anderen Ausführungsformen der Erfindung kann an der Antriebswelle und dem Bohrwerkzeug ein Drehmoment von etwa 1 Nm bis etwa 3 Nm erzeugt werden. In wiederum anderen Ausführungsformen der Erfindung kann an der Antriebswelle und dem Bohrwerkzeug ein Drehmoment von etwa 1,5 Nm bis etwa 2,5 Nm erzeugt werden. Aufgrund der hohen Drehzahl und des im Vergleich zu bekannten Bohrturbinen geringen Drehmoments eignen sich Schneidwerkzeuge mit schleifendem bzw. schabendem Gesteinszerstörungsmechanismus. Dadurch fällt beim Bohrprozess sehr feines Bohrklein an, sodass sich in Vermischung mit dem rückströmenden Antriebsfluid eine Suspension bildet. Zudem bildet sich ein Bohrloch mit gleichmäßiger und geradliniger Bohrlochwand aus. Beides wirkt sich vorteilhaft auf den Abtransport des Bohrkleins aus der Bohrung aus.

In einigen Ausführungsformen der Erfindung kann das Antriebsfluid über eine Zuleitung zugeführt werden, welche einen ersten Längsabschnitt mit einem ersten Durchmesser aufweist und einen zweiten Längsabschnitt mit einem zweiten Durchmesser, wobei der erste Durchmesser größer ist als der zweite Durchmesser. Der erste Längsabschnitt vermeidet das Auftreten hoher Druckverluste über den größeren Teil des zurückzulegenden Weges und der zweite Längsabschnitt ist so klein gewählt, dass die Leitung auch in einer Richtbohrung mit geringem Durchmesser und bei kleinem Radius durch einen Ablenkschuh geführt werden kann. In einigen Ausführungsformen der Erfindung ist der erste Durchmesser zwischen etwa 25 mm und etwa 100 mm oder zwischen etwa 35 mm und etwa 60 mm gewählt. Der zweite Durchmesser kann zwischen etwa 5 mm und etwa 20 mm oder zwischen etwa 10 mm und etwa 16 mm gewählt sein.

Nachfolgend soll die Erfindung anhand von Ausführungsbeispielen und Figuren ohne Beschränkung des allgemeinen Erfindungsgedankens näher erläutert werden. Dabei zeigt
Figur 1 einen ersten Verfahrensschritt beim Einsatz der erfindungsgemäßen Bohrturbine in einer verrohrten Geothermiebohrung.
Figur 2 zeigt einen zweiten Verfahrensschritt beim Einsatz der erfindungsgemäßen Bohrturbine in einer verrohrten Geothermiebohrung.
Figur 3 zeigt ein erstes Ausführungsbeispiel einer erfindungsgemäßen Bohrturbine in einer ersten Ansicht.
Figur 4 zeigt ein erstes Ausführungsbeispiel einer erfindungsgemäßen Bohrturbine in einer zweiten Ansicht.
Figur 5 zeigt ein erstes Ausführungsbeispiel einer erfindungsgemäßen Bohrturbine in einer dritten Ansicht.
Figur 6 zeigt einen ersten Schnitt der Bohrturbine gemäß dem ersten Ausführungsbeispiel.
Figur 7 zeigt einen zweiten Schnitt der Bohrturbine gemäß dem ersten Ausführungsbeispiel.
Figur 8 zeigt ein zweites Ausführungsbeispiel einer erfindungsgemäßen Bohrturbine in einer ersten Ansicht.
Figur 9 zeigt ein zweites Ausführungsbeispiel einer erfindungsgemäßen Bohrturbine in einer zweiten Ansicht
Figur 10 zeigt ein zweites Ausführungsbeispiel einer erfindungsgemäßen Bohrturbine in einer dritten Ansicht.
Figur 11 zeigt einen ersten Schnitt der Bohrturbine gemäß dem zweiten Ausführungsbeispiel.
Figur 12 zeigt einen zweiten Schnitt der Bohrturbine gemäß dem zweiten Ausführungsbeispiel.

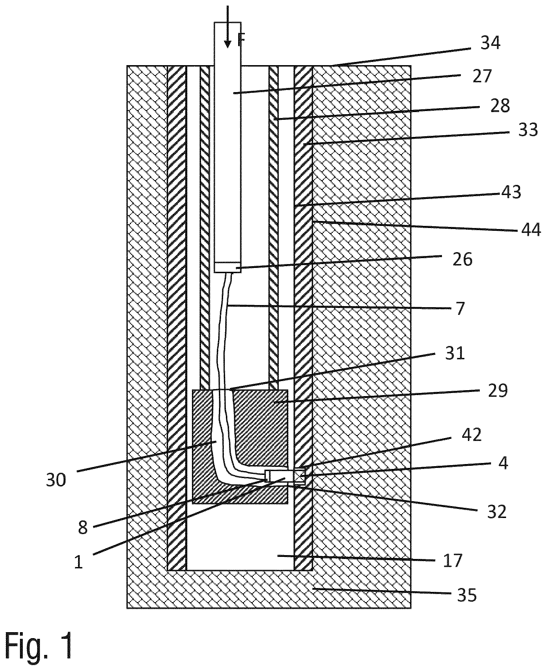

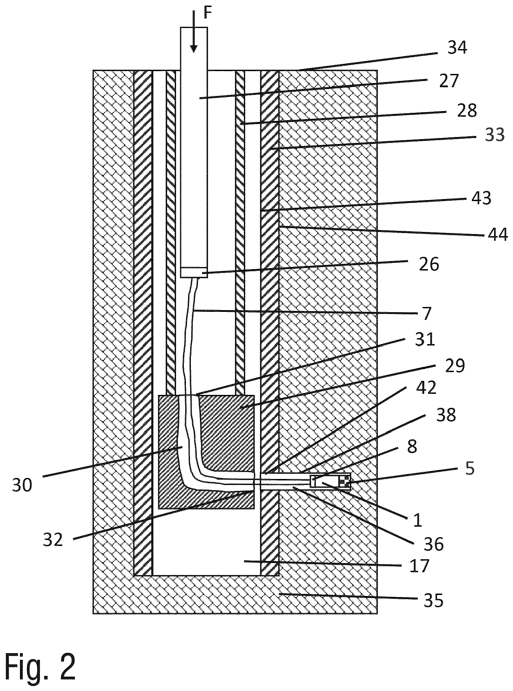

Figur 1 und Figur 2 zeigen den beispielhaften Einsatz der erfindungsgemäßen Bohrturbine in einer verrohrten Geothermiebohrung 17. Die Geothermiebohrung 17 erstreckt sich entlang einer vorgebbaren Richtung, beispielsweise senkrecht, von der Oberfläche 34 nach unten durch die Erdschichten 35 bis in die gewünschte Tiefe. In einigen Ausführungsformen der Erfindung kann die Geothermiebohrung eine Tiefe von mehr als 150 m oder mehr als 500 m oder mehr als 1000 m oder mehr als 3000 m aufweisen. Die Bohrlochverrohrung 33 kann einen Innendurchmesser von etwa 10 cm bis etwa 20 cm aufweisen. Die Bohrlochverrohrung 33 kann aus einem Metall oder einer Legierung gefertigt sein, beispielsweise aus einem Stahl.

Figur 1 zeigt die erfindungsgemäße Bohrturbine während des ersten Verfahrensschrittes beim Herstellen der Bohrlochverrohrungsbohrung 42, welche die Bohrlochverrohrung 33 durchdringt. Die hierzu verwendete Vorrichtung enthält zumindest ein Rohr 28, das sich über eine vorgewählte Strecke nach unten durch die Bohrlochverrohrung 33 erstreckt. Das Rohr 28 kann jedes nach dem Stand der Technik bekannte Rohr aus polymerem oder metallischem Werkstoff sein. Am Ende des Rohres 28 ist ein Ablenkschuh 29 angebracht, beispielsweise durch Verschraubung, Verschweißung, Lötung oder Klebung.

Der Ablenkschuh 29 kann einen polyedrischen oder zylindrischen Grundkörper aus einem Metall oder einer Legierung oder einem Kunststoff aufweisen. Der Ablenkschuh 29 weist eine erste Öffnung 31 auf, welche dem lichten Querschnitt des Rohres 28 zugewandt ist. Weiterhin weist der Ablenkschuh 29 eine zweite Bohrung 32 auf, welche in eine Seitenfläche eingebracht und der Bohrlochverrohrung 33 zugewandt ist. Die erste und die zweite Bohrung 31 und 32 im Ablenkschuh 29 sind durch eine Ablenkdurchführung 30 miteinander verbunden. Der Ablenkschuh 29 kann durch Verdrehen des Rohres 28 in eine vorbestimmte Position innerhalb der Bohrlochverrohrung 33 ausgerichtet und nachfolgend fixiert werden. Durch die Länge des Rohres 28 und die Orientierung des Ablenkschuhs 29 kann somit die zweite Bohrung auf die Stelle ausgerichtet werden, an der die Bohrlochverrohrung 33 durchbohrt werden soll. Die erste Bohrung 31 und die zweite Bohrung 32 können durch die Ablenkdurchführung 30 unter einen vorgebbaren Winkel zueinander verbunden sein. In den Figuren 1 und 2 ist ein Winkel von etwa 90° dargestellt. In anderen Ausführungsformen der Erfindung kann der Winkel zwischen etwa 20° und etwa 90° oder zwischen etwa 20° und etwa 70° oder zwischen etwa 25° und etwa 45° betragen.

Innerhalb des Rohres 28 wird eine Zuleitung geführt, welche dazu eingerichtet ist, ein Antriebsfluid zur Bohrturbine zu leiten. Im dargestellten Ausführungsbeispiel weist die Zuleitung einen ersten Längsabschnitt 27 mit einem ersten Durchmesser auf und einen zweiten Längsabschnitt 7 mit einem zweiten Durchmesser, wobei der erste Durchmesser größer ist als der zweite Durchmesser. Die Verbindung zwischen dem ersten Längsabschnitt 27 und dem zweiten Längsabschnitt 7 erfolgt mittels einer optionalen Schlauchkupplung 26, welche eine druckdichte Verbindung ermöglicht und in einfacher Weise lösbar ist. In anderen Ausführungsformen kann die Schlauchkupplung 26 auch entfallen. Insbesondere bei kurzen Leitungslängen kann auch eine Leitung mit konstantem Durchmesser verwendet werden. Die Zuleitung kann als Schlauchleitung ausgeführt sein, um die Handhabung zu erleichtern. Zumindest der zweite Längsabschnitt 7 kann aus Kunststoff, Metall oder einem Verbundwerkstoff bestehen und für einen Betriebsinnendruck von min. 200 bar ausgelegt sein. Der Außendurchmesser des zweiten Längsabschnittes 7 kann 20 mm und der Innendurchmesser kann 12 mm betragen. Die Länge der kleinkalibrigen Schlauchleitung 7 entspricht zumindest der Bohrlänge der Richtbohrung 38.

Das der Schlauchkupplung 26 gegenüberliegende Ende des zweiten Längsabschnittes 7 ist mit einer optionalen zweiten Schlauchkupplung 8 mit der Bohrturbine 1 verbunden, so dass das Antriebsfluid von der Oberfläche 34 mittels einer nicht dargestellten Pumpe durch den ersten Längsabschnitt 27 in den zweiten Längsabschnitt 7 und von dort zur Bohrturbine 1 gefördert werden kann.

Zur Herstellung der Bohrlochverrohrungsbohrung 42 wird die Bohrturbine 1 mit dem zweiten Längsabschnitt 7 der Zuleitung durch den Ablenkschuh 29 bis an die Innenseite 43 der Bohrlochverrohrung 33 geführt. Die Flexibilität, die Dimensionen und die Oberflächenbeschaffenheit des zweiten Längsabschnittes 7 erlauben die Ablenkung der Leitung durch den Ablenkschuh 29 ohne große Reibungsverluste. Die Bohrturbine 1 ist im ersten Verfahrensschritt mit einem Fräskopf 4 bestückt. Durch Zufuhr eines Antriebsfluides, beispielsweise Wasser, mit einem Druck von etwa 100 bar bis etwa 200 bar oder von etwa 100 bar bis etwa 160 bar und mit einem Durchfluss von etwa 100 l/min bis etwa 300 l/min oder von etwa 150 l/min bis etwa 250 l/min wird der Fräskopf 4 in Rotation versetzt. Durch einen linearen Vorschub wird das Material der Bohrlochverrohrung 33 zerspant und die Herstellung der Bohrlochverrohrungsbohrung 42 ermöglicht. Nach ca. 20 Minuten bis etwa 40 Minuten ist die Bohrlochverrohrung 33 mit einer Wandstärke von etwa 5 mm durchbohrt.

Nach der Herstellung der Bohrlochverrohrungsbohrung 42 wird die Bohrturbine 1 in einem optionalen Verfahrensschritt über die Bohrlochverrohrung 33 an die Oberfläche 33 geholt. Dort kann optional das Bohrwerkzeug gewechselt werden. Beispielsweise kann der Fräskopf 4 gegen einen Bohrmeißel 5 ausgetauscht werden. In anderen Ausführungsformen kann der Wechsel des Bohrwerkzeuges entfallen.

Figur 2 zeigt die erfindungsgemäße Bohrturbine während des zweiten Verfahrensschrittes beim Herstellen der Richtbohrung 38 in der Erdschicht 35 ausgehend von der Bohrlochwand 44 am Ausgang der Bohrlochverrohrungsbohrung 42. Gleiche Bestandteile der Erfindung sind mit gleichen Bezugszeichen versehen, so dass sich die nachfolgende Beschreibung auf die wesentlichen Unterschiede beschränkt.

Die Bohrturbine 1 ist wie zuvor beschrieben mit einem Bohrmeißel 5 versehen und wird wie vorstehend beschrieben unter Verwendung des Rohres 28 und des Ablenkschuhs 29 in die verrohrte Geothermiebohrung 17 eingebracht, so dass die Bohrturbine 1 durch die zuvor hergestellte Bohrlochverrohrungsbohrung 42 hindurchgeführt werden kann, sodass die Stirnseite des Bohrmeißels 5 in Kontakt mit der Innenseite 43 der Bohrlochwand 44 steht. Durch Zufuhr des Antriebsfluides wird der Bohrmeißel 5 in Rotation versetzt und eine Vorschubkraft aufgebracht, so dass die Richtbohrung 38 in der Erdschicht 35 aufgefahren wird. Das entstehende Bohrklein wird zusammen mit dem Antriebsfluid als Emulsion 46 über den Ringraum 36 an die Oberfläche 34 gefördert. Die Bohrturbine 1 wird solange mit dem Antriebsfluid beaufschlagt, bis eine gewünschte Bohrlochlänge der Richtbohrung 38 hergestellt ist. Der zweite Längsabschnitt 7 der Leitung wird durch die von der Bohrturbine 1 generierte Vorschubkraft aus der Bohrlochverrohrung 33 hinter der Bohrturbine 1 hergeführt.

Die als Bohrwerkzeuge verwendeten Fräsköpfe 4 und Bohrmeißel 5 besitzen eine an sich bekannte Ausgestaltung zum Zerspanen der Bohrlochverrohrung 33 bzw. der Erdschicht 35, um die Herstellung der Bohrlochverrohrungsbohrung 42 bzw. der Richtbohrung zu ermöglichen. Hierzu können unterschiedliche Bohrmeißel für unterschiedliche Gesteinsarten bzw. Bodenbeschaffenheiten verwendet werden. Die Schneidelemente des Fräskopfes 4 und des Bohrmeißels 5 können aus Hartmetall, Diamant oder anderen Materialien gefertigt sein. In einigen Ausführungsformen kann ein Tausch des Bohrwerkzeuges auch entfallen, etwa weil ein universelles Bohrwerkzeug verwendet wird oder die Geothermiebohrung 17 keine Bohrlochverrohrung 33 aufweist. Die Dimensionen der Bohrwerkzeuge 4 und 5 sind so gewählt, dass die bestückte Bohrturbine 1 leichtgängig durch den Ablenkschuh 29 geführt werden kann. Die mit dem Bohrmeißel 5 ausgestattete Bohrturbine 1 ist dazu geeignet, kleinkalibrige Richtbohrungen in Erdschichten aus kristallinem Hartgestein herzustellen, wie beispielsweise in Granit.

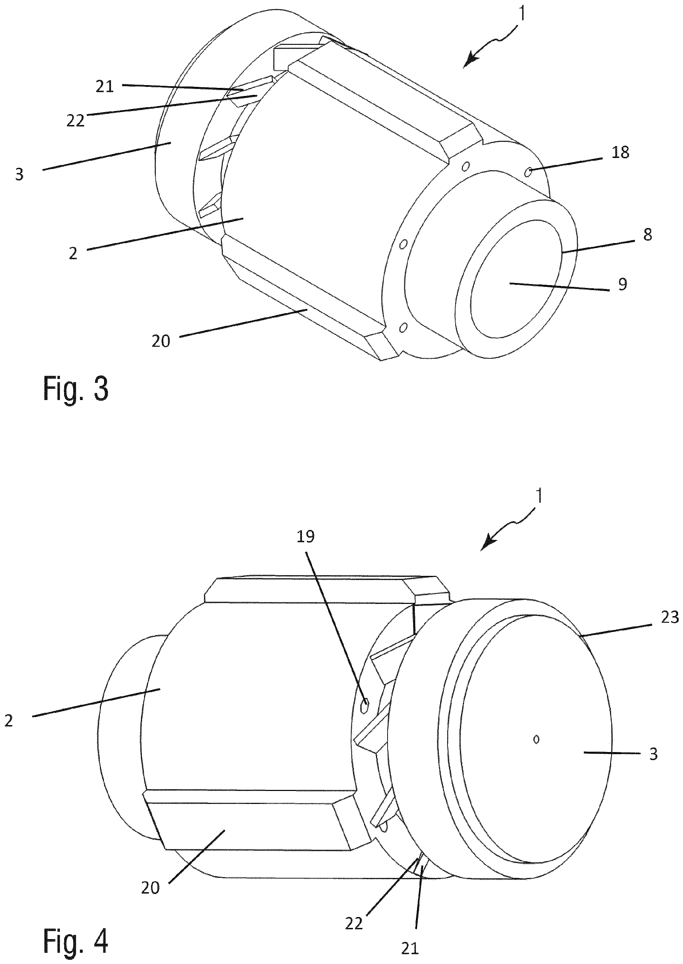

Anhand der Figur 3, Figur 4, Figur 5, Figur 6 und Figur 7 wird ein erstes Ausführungsbeispiel der erfindungsgemäßen Bohrturbine 1 näher erläutert.

Die Bohrturbine 1 weist ein Gehäuse 2, eine Antriebswelle 6 und ein Turbinenlaufrad 3 auf, wobei sie modular aufgebaut ist. Die Bohrturbine 1 ist so dimensioniert, dass sie mit bestücktem Fräskopf 4 oder Bohrmeißel 5 durch den Ablenkschuh 29 hindurchgeführt werden kann. Im dargestellten Ausführungsbeispiel kann das Gehäuse einen Durchmesser von etwa 36 mm und eine Länge von etwa 42 mm aufweisen.

Das Gehäuse 2 weist ein erstes Ende auf, an welchem sich das Bohrwerkzeug oder ein zur Aufnahme des Bohrwerkzeuges eingerichtetes Spannwerkzeug befindet. Weiterhin weist das Gehäuse 2 ein gegenüberliegendes zweites Ende auf, an welchem sich die zweite Schlauchkupplung 8 befindet. Über diese kann das Antriebsfluid in die Zufuhrleitung 9 eingebracht werden. Im Betrieb wird das Turbinenlaufrad 3 mit dem Antriebsfluid angeströmt, wodurch das Turbinenlaufrad 3, die Antriebswelle 6 und der Fräskopf 4 oder der Bohrmeißel 5 mit identischer Winkelgeschwindigkeit rotieren.

Wie in den Figuren 3 und 4 erkennbar ist, sind am Gehäuse 2 der Bohrturbine 1 drei in Umfangsrichtung regelmäßig beabstandete Führungskufen 20 angeordnet, die denselben oder einen geringfügig kleineren Außendurchmesser besitzen wie der Fräskopf 4 bzw. der Bohrmeißel 5. Hierdurch kann die Bohrturbine 1 durch die entstehende Richtbohrung 38 vorgeschoben werden.

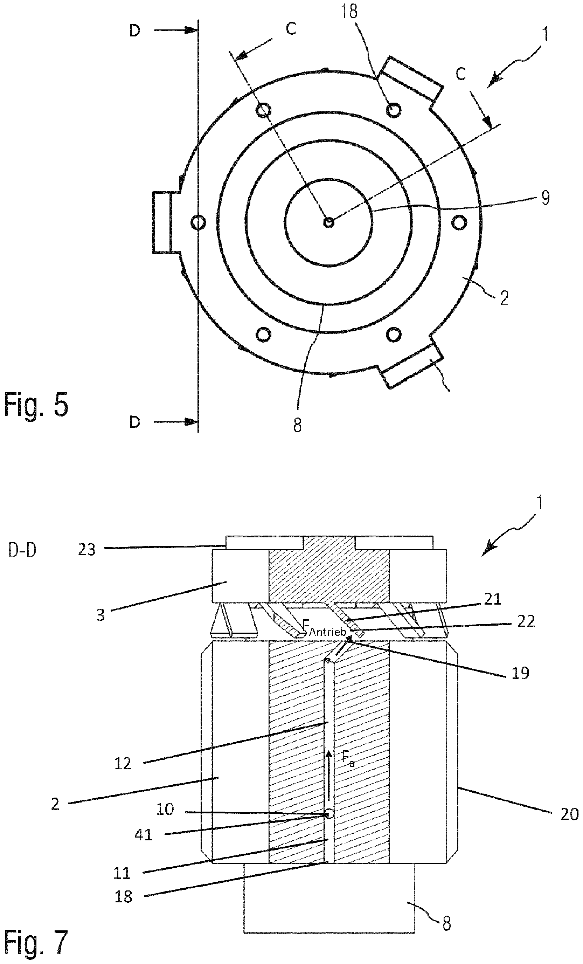

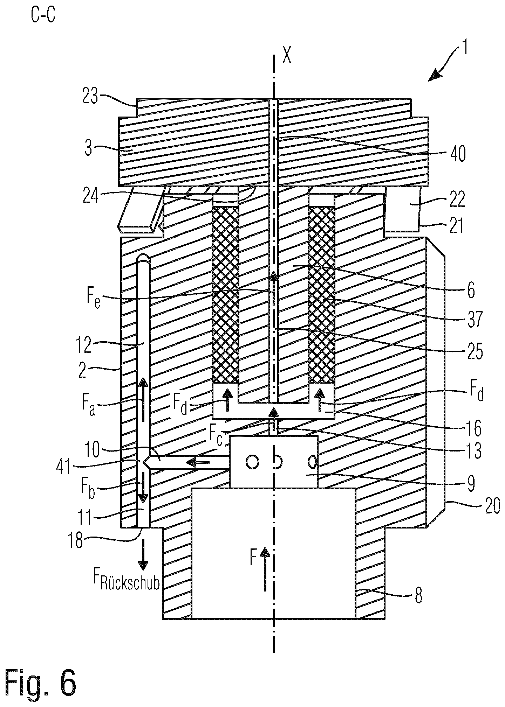

Wie in den Figuren 5 und 6 zu erkennen ist, teilt sich die Zufuhrleitung 9 in sechs Unterzufuhrleitungen 10 auf, die radial im Gehäuse 2 nach außen verlaufen. Von den Unterzufuhrleitungen 10 aus führen sechs Rückschubleitungen 11 bis an die Rückseite des Gehäuses 2, wo sie jeweils in einer Rückschuböffnung 18 münden. Die Rückschubleitungen erzeugen beim Betrieb der Bohrturbine eine Vorschubkraft, welche das Bohrwerkzeug in Eingriff mit dem zu zerspanenden Material bringt. In anderen Ausführungsformen der Erfindung kann die Anzahl der Rückschuböffnungen 18 größer oder geringer sein. Die Erfindung lehrt nicht die Verwendung von genau 6 Rückschuböffnungen als Lösungsprinzip.

Wie am besten aus den Schnittdarstellungen nach Figur 6 und Figur 7 ersichtlich ist, weist die Bohrturbine 1 sechs Antriebsleitungen 12, welche gleichmäßig entlang des Umfangs im Gehäuse angeordnet sind und von den sechs Unterzufuhrleitungen 10 aus jeweils über eine Verzweigung 41 bis an die erste Seite des Gehäuses 2 geführt sind. An der ersten Seite des Gehäuses 2 mündet jede Antriebsleitung 12 in einer Antriebsmündung 19. Das über die Antriebsmündung 19 austretende Antriebsfluid trifft auf das Turbinenlaufrad 3 und erzeugt dort ein Antriebsmoment. In anderen Ausführungsformen der Erfindung kann die Anzahl der Antriebsmündungen 19 größer oder geringer sein. Die Erfindung lehrt nicht die Verwendung von genau 6 Antriebsmündungen als Lösungsprinzip.

Weiterhin zeigt Figur 7, dass das Turbinenlaufrad 3 mit einer Mehrzahl von geneigten Prallelementen 21 versehen ist, welche jeweils eine Prallfläche 22 besitzen. Die Prallelemente 21 können eine Gleichdruckbeschaufelung des Turbinenlaufrades 3 bilden. Weiterhin zeigt Figur 7, dass die Antriebsleitung 12 einen Längsabschnitt aufweist, welcher zur Längsachse der Bohrturbine einen Winkel von etwa 20° bis etwa 70° einschließt. Dieser Winkel ist so gewählt, dass der Längsabschnitt in etwa parallel zum Normalenvektor der Prallflächen verläuft. Hierdurch kann das erzeugte Drehmoment und/oder die Drehzahl vergrößert sein.

Aus Figur 6 und 7 ist auch ersichtlich, dass das Turbinenlaufrad 3 offen am Gehäuse 2 angeordnet ist bzw. in radialer Richtung nicht von einer Gehäusewandung umschlossen wird. Dadurch kann das Antriebsfluid und Verschmutzungen einfach abgeführt werden, ohne dass diese zum Verklemmen des Turbinenlaufrades 3 führen.

Im Weiteren zeigt Figur 6 eine Lagerkammer 16, in welcher die Antriebswelle 6 rotierbar auf der Längsachse X mit zumindest einem optionalen Kugellager 37 gelagert ist. Zwischen der Zufuhrleitung 9 und der Lagerkammer 16 befindet sich entlang der Längsachse X eine Verbindungsleitung 13, die einen Durchtritt eines Teils des Antriebsfluides F ermöglicht. Hierdurch kann die Lagerkammer 16 und/oder das zumindest eine Kugellager 37 mit einem Teil des Antriebsfluides F gespült werden. Darüber hinaus kann das zumindest eine Kugellager 37 gekühlt werden. Schließlich kann das Antriebsfluid F eine hydrodynamische Lagerung der Antriebswelle 6 bewirken.

Die Antriebswelle 6 besitzt zumindest eine optionale Hohlbohrung 25 entlang Längsachse X, durch die ebenfalls ein Durchtritt eines Teils des Antriebsfluides F ermöglicht wird. Wie in Figur 6 ersichtlich, ist das Turbinenlaufrad 3 über eine Welle-Nabe Verbindung 24 koaxial zur Antriebswelle 6 ausgerichtet und mit dieser fixiert. Im Turbinenlaufrad 3 ist eine Hohlbohrung 25 ausgebildet, welche einen Durchtritt eines Teils des Antriebsfluides F ermöglicht. An der dem Gehäuse 2 abgewandten Seite des Turbinenlaufrades 3 ist ein Spannwerkzeug 23 für das Bohrwerkzeug vorhanden. Somit kann das durch die Hohlbohrung 25 austretende Antriebsfluid zur Kühlung des Bohrwerkzeuges und/oder zur Abfuhr des Bohrkleins verwendet werden. In einigen Ausführungsformen der Erfindung kann das vorne austretende Antriebsfluid selbst einen Gesteinsabtrag bewirken.

Der Verlauf des Antriebsfluides in der Bohrturbine 1 wird mittels der Pfeile F angedeutet. Der zugeführte Strom des Antriebsfluides F gelangt von der zweiten Schlauchkupplung 8 in die Zufuhrleitung 9. Dort teilt sich der Strom in die beispielhaft 6 Unterzufuhrleitungen 10 und gelangt dort jeweils zu einer Verzweigung 41. Dort teilt sich der Strom jeweils erneut in die Antriebsleitungen 12 und die Rückschubleitungen 11. Aus den Antriebsmündungen 19 der Antriebsleitungen 12 des Gehäuses 2 tritt der Fluidstrom Fa in Form von Fluidstrahlen F_{Antrieb} aus und trifft durch entsprechende Ausrichtung der Antriebsmündungen 19 auf die Prallflächen 22 der Prallelemente 21, wodurch das Turbinenlaufrad 3 einschließlich des Fräskopfes 4 angetrieben beziehungsweise in Rotation versetzt wird. Aus den Rückschuböffnungen 18 der Rückschubleitungen 11 des Gehäuses 2 tritt der Fluidstrom Fb in Form von Fluidstrahlen F_{Rückschub} aus. Diese generieren durch eine entsprechende Ausrichtung der Rückschuböffnungen 18 eine Vorschubkraft auf die Bohrturbine 1, welche entlang Längsachse X in Richtung des Fräskopfes 4 wirkt.

Schließlich gelangt ein Fluidstrom Fc von der Zufuhrleitung 9 durch die Verbindungsleitung 13 in die Lagerkammer 16. Dieser Fluidstrom Fc teilt sich in der Lagerkammer 16 in zwei Teilströme Fd und Fe auf. Der Fluidstrom Fd strömt durch die offenen Kugellager 37. Diese werden dadurch geschmiert und/oder gekühlt. Anschließend tritt der Fluidstrom Fd an der Vorderseite des Gehäuses 2 aus. Der Fluidstrom Fe strömt aus der Lagerkammer 16 zunächst durch die Hohlbohrungen 25 der Antriebswelle 6 und des Turbinenlaufrades 3 und tritt sodann aus der Spülöffnung 40 aus. Von dort kann er über Spülkanäle im Bohrwerkzeug an dessen Werkzeugschneiden geleitet werden, so dass der Fluidstrom Fe als Bohrspülung für eine Bohrlochsohlenreinigung und Kühlung des Bohrwerkzeuges 4 bzw. 5 sorgt.

Die Durchmesser der Zufuhrleitung 9, der Antriebsleitungen 12, der Rückschubleitungen 11, der Verbindungsleitung 13 und der Hohlbohrungen 25 der Bohrturbine 1 sind so gewählt, dass ausreichend Vorschubkraft, Drehmoment, Drehzahl und Spülung bereitgestellt wird. Durch Optimierung der Anzahl und/oder der Querschnitte der Leitungen kann ein vorteilhaftes Verhältnis der Parameter zueinander eingestellt werden, wodurch lange Betriebszeiten der Bohrturbine 1 bei möglichst hohem Bohrfortschritt möglich sind. In einigen Ausführungsformen der Erfindung können einzelne Antriebsmündungen 19 und/oder Rückschuböffnungen 18 mit Gewindeeinsätzen versehen werden, so dass diese leicht mit entsprechenden Schraubdeckeln verschlossen werden können. Hierdurch kann die Bohrturbine 1 an unterschiedliche Betriebsbedingungen angepasst werden. Beispielsweise können einzelne Rückschuböffnungen 18 verschlossen werden, so dass Bohrungen mit hoher Drehzahl bzw. hohem Drehmoment und niedriger Vorschubkraft ausgeführt werden können. Für Bohrungen in andere geologische Formationen können einzelne Antriebsmündungen verschlossen werden, um die Drehzahl bzw. das Drehmoment abzusenken und dafür die Vorschubkraft zu erhöhen.

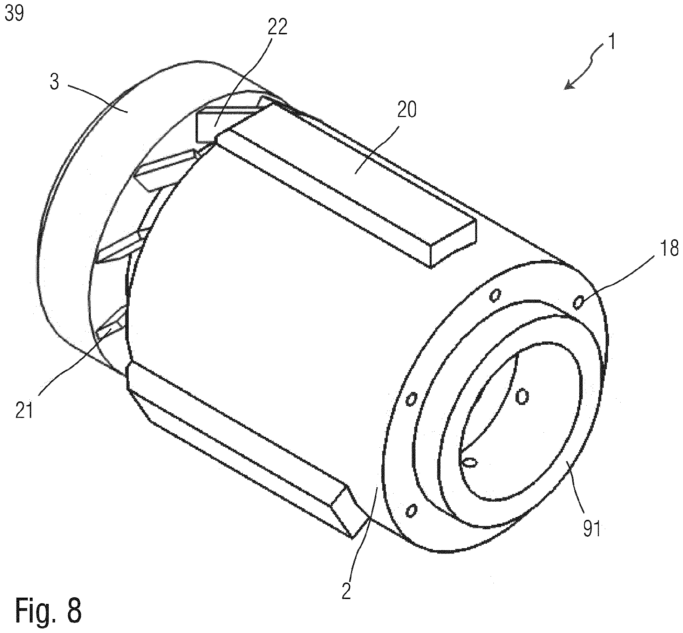

Anhand der Figur 8, Figur 9, Figur 10, Figur 11 und Figur 12 wird ein zweites Ausführungsbeispiel der erfindungsgemäßen Bohrturbine 1 näher erläutert. Gleiche Merkmale der Erfindung sind mit gleichen Bezugszeichen versehen, so dass sich die nachstehende Beschreibung auf die wesentlichen Unterschiede beschränkt.

Die erfindungsgemäße Bohrturbine 1 gemäß dem zweiten Ausführungsbeispiel weist im Wesentlichen zwei Unterschiede zu der in den Figuren 3 - 6 beschriebenen ersten Ausführungsform auf. Diese zwei Unterschiede werden nachstehend einzeln beschrieben. Es ist darauf hinzuweisen, dass diese nicht stets zusammen in einer Ausführungsform realisiert sein müssen. Die vorliegende Erfindung erstreckt sich auch auf eine dritte und eine vierte Ausführungsform, welche gegenüber der ersten Ausführungsform nur einen der nachfolgend beschriebenen Unterschiede aufweist.

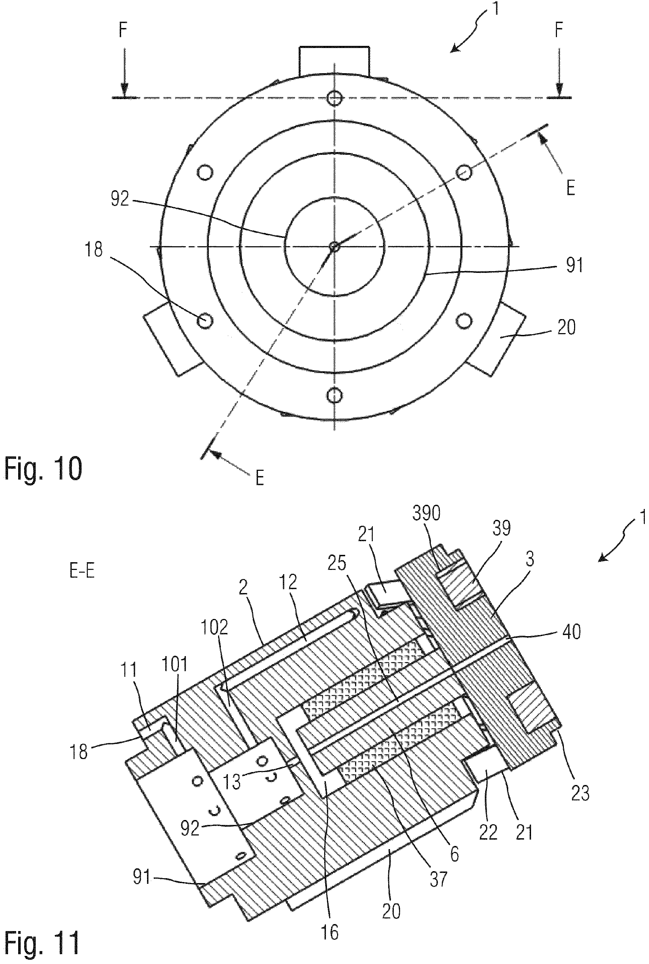

Wie in Figur 8 und Figur 11 ersichtlich ist, weist das Gehäuse 2 im Unterschied zur ersten Ausführungsform nicht nur eine einzige Zufuhrleitung 9 auf. Vielmehr sind im Gehäuse 2 eine erste Zufuhrleitung 91 und eine zweite Zufuhrleitung 92 vorhanden. In einigen Ausführungsformen der Erfindung können die erste Zufuhrleitung 91 und die zweite Zufuhrleitung 92 wie in den Figuren 10 und 11 ersichtlich konzentrisch bzw. koaxial angeordnet sein. In anderen Ausführungsformen der Erfindung ist auch eine Anordnung neben- bzw. übereinander an der dem Turbinenlaufrad 3 gegenüberliegenden Seite des Gehäuses 2 möglich.

Bei Betrieb der Bohrturbine 1 können die erste Zufuhrleitung 91 und die zweite Zufuhrleitung 92 mit jeweils einer Schlauchleitung bzw. einer koaxialen Schlauchleitung mit zwei Fördereinrichtungen bzw. Pumpen verbunden werden. Dieses Merkmal hat die Wirkung, dass das der ersten Zufuhrleitung 91 und der zweiten Zufuhrleitung 92 jeweils zugeführte Antriebsfluid nach Art und/oder Menge und/oder Druck unterschiedlich sein kann. In gleicher Weise kann eine einzige Fördereinrichtung bzw. Pumpe verwendet werden, wenn in einer oder beiden Schlauchleitungen eine Drossel oder ein Regelventil vorhanden ist, welches den Durchfluss oder den Druck in der betreffenden Leitung beeinflusst.

Wie Figur 11 weiter zeigt, ist die erste Zufuhrleitung 91 mittels zumindest einer ersten Unterzufuhrleitunge 101 an zumindest eine Rückschubleitung 11 angeschlossen. Die Rückschubleitung 11 mündet an einer Rückschuböffnung 18, wie vorstehend beschrieben. Die Rückschuböffnung 18 mündet an der dem Turbinenlaufrad 3 gegenüberliegenden Seite des Gehäuses 2, wie vorstehend beschrieben. Anders als bei der vorstehend beschriebenen ersten Ausführungsform kann das Antriebsfluid bei Betrieb der Bohrturbine 1 nicht von der ersten Zufuhrleitung 91 über eine Antriebsleitung 12 zum Turbinenlaufrad 3 strömen.

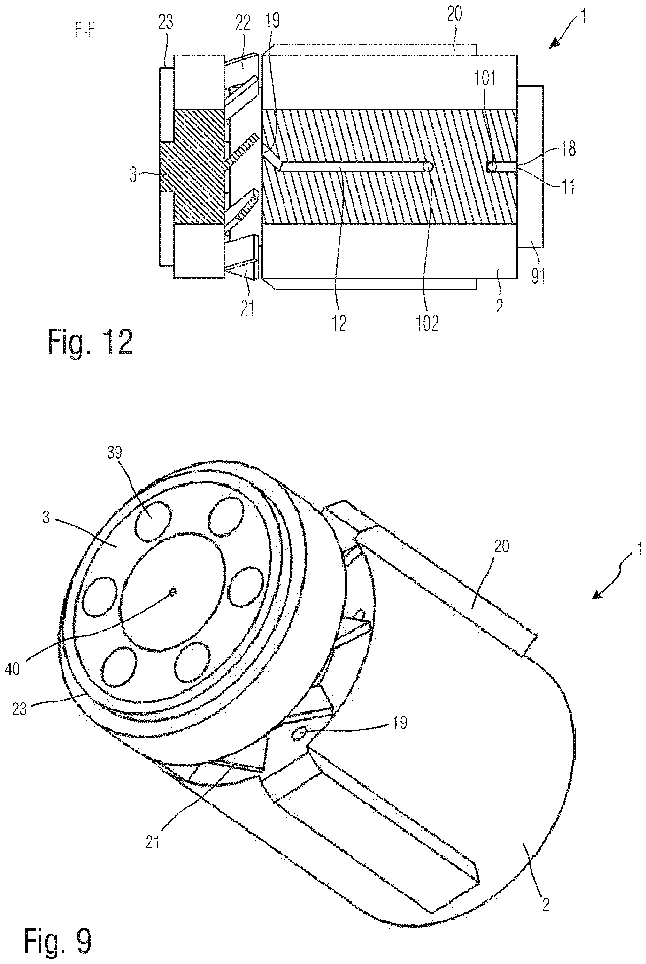

Weiterhin ist aus Figur 11 und Figur 12 ersichtlich, dass die zweite Zufuhrleitung 92 mittels zumindest einer zweiten Unterzufuhrleitung 102 an zumindest eine Antriebsleitung 12 angeschlossen ist. Die Antriebsleitung 12 ist dazu eingerichtet, das Antriebsfluid unter einem vorgebbaren Winkel über zumindest eine Antriebsmündung 19 auf die Prallflächen 22 der Prallelemente 21 des Turbinenlaufrades 3 zu lenken, wodurch das Turbinenlaufrad 3 einschließlich des Fräskopfes 4 angetrieben beziehungsweise in Rotation versetzt wird. Anders als bei der vorstehend beschriebenen ersten Ausführungsform kann das Antriebsfluid jedoch bei Betrieb der Bohrturbine 1 nicht von der zweiten Zufuhrleitung 92 über eine Rückschubleitung 11 zu einer Rückschuböffnung 18 strömen.

Da das der ersten Zufuhrleitung 91 und der zweiten Zufuhrleitung 92 jeweils zugeführte Antriebsfluid nach Art und/oder Menge und/oder Druck unterschiedlich sein kann, erlauben diese Merkmale der zweiten Ausführungsform, das Antriebsdrehmoment bzw. die Antriebsleistung der Bohrturbine 1 unabhängig von der Vorschubkraft zu steuern bzw. zu regeln. Hierdurch kann die Standzeit des Werkzeugs verlängert und/oder der Vortrieb beschleunigt sein. Die Bohrturbine 1 kann darüber hinaus im Betrieb dynamisch auf das jeweils angetroffene Gestein eingestellt werden. Hierzu kann das aus der Bohrung ausgetragene Bohrklein abgeschieden und analysiert werden, um die Betriebsbedingungen einzustellen.

Wie die Figuren 9 und 11 zeigen, sind in das Turbinenlaufrad 3 sechs Öffnungen 390 eingebracht, in welche zumindest ein Gewicht 39 aufnehmbar ist. Im dargestellen Ausführungsbeispiel haben die Öffnungen 390 einen runden Querschnitt. In anderen Ausführungsformen der Erfindung können die Öffnungen 390 auch einen polygonalen Querschnitt aufweisen. Die Anzahl der Öffnungen kann in einigen Ausführungsformen der Erfindung zwischen etwa 2 und etwa 16 oder zwischen etwa 4 und etwa 10 betragen. Die Erfindung lehrt nicht die Verwendung von genau sechs Öffnungen 390 als Lösungsprinzip. In wiederum einer anderen Ausführungsform kann zumindest eine Öffnung als ringförmige Nut in das Turbinenlaufrad 3 eingebracht sein.

Die Gewichte 39 können eine unterschiedliche Größe aufweisen und/oder aus unterschiedlichen Materialien gefertigt sein, welche beispielsweise unterschiedliche Dichte aufweisen. Bei der Anwendung der Bohrturbine 1 kann dem Bedienpersonal ein Sortiment unetrschiedlicher Gewichte zur Verfügung gestellt werden, aus welchen der Bediener auswählen kann. Die Gewichte 39 können durch Einpressen, Einlegen, Verschraubung, Einkleben und/oder in sonstiger Weise in den Öffnungen 390 befestigt werden. In gleicher Weise wir vorstehend für ein Turbinenlaufrad 3 beschrieben, können Öffnungen 390 auch in den Fräskopf 4 und/oder den Bohrmeißel 5 und/oder das Spannwerkzeug 23 eingebracht werden.

Durch Auswahl der Gewichte 39, welche in die jeweiligen Öffnungen 390 eingebracht und dort befestigt werden, können die rotierenden Teile gewuchtet werden, so dass die Bohrturbine 1 einen ruhigen Lauf zeigt. In anderen Ausführungsformen der Erfindung können unterschiedliche Gewichte mit unterschiedlicher Masse in die Öffnungen eingebracht werden, so dass die Bohrturbine 1 eine Unwucht zeigt. Dieses Merkmal hat die Wirkung, dass der auf der Drehachse liegende Mittelpunkt der Schneide eines Bohrmeißels 5 oder eines Fräskopfes 4 in Radialrichtung der Bohrturbine nicht ortsfest ist. Vielmehr beschreibt der Mittelpunkt der Schneide des Bohrmeißels 5 oder des Fräskopfes 4 in dem zu zerspanenden Material in etwa eine Kreisbahn.

Die Schnittgeschwindigkeit eines rotierenden Zerspanungswerkzeuges steigt linear mit dem Radius an, d.h. am Mittelpunkt der Schneide eines bekannten Bohrmeißels 5 oder Fräskopfes 4 ist die Schnittgeschwindigkeit null und der Abtrag entsprechend gering. Dieser geringe Abtrag limitiert die Bearbeitungszeit für die gesamte Bohrung. Durch die erfindungsgemäß eingesetzte Unwucht der Bohrturbine 1 beschreibt der Mittelpunkt der Schneide des Bohrmeißels 5 oder des Fräskopfes 4 in dem zu zerspanenden Material in etwa eine Kreisbahn. Jeder Punkt dieser Kreisbahn wird in weiteren Bearbeitungsphasen von anderen Teilflächen des Bohrmeißels 5 oder des Fräskopfes 4 mit höherer Schnittgeschwindigkeit überstrichen, so dass die Abtragleistung über den gesamten Querschnitt der Bohrung betrachtet steigt und die Bearbeitungszeiten verkürzt werden können.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Bohrturbine (1) mit
einem Gehäuse (2), in welchem eine Antriebswelle (6) drehbar gelagert ist, und mit
einem Turbinenlaufrad (3), welches dazu eingerichtet ist, die Antriebswelle (6) in Rotation zu versetzen, wobei die Antriebswelle (6) mit einem Bohrwerkzeug (4, 5) verbindbar ist, und wobei
das Gehäuse zumindest eine Antriebsleitung (9, 12) mit zumindest einer Antriebsmündung (19) aufweist, durch welche ein Antriebsfluid auf das Turbinenlaufrad (3) lenkbar ist,
**dadurch gekennzeichnet, dass**
das Turbinenlaufrad (3) unmittelbar mit der Antriebswelle (6) verbunden ist, so dass im Betrieb das Turbinenlaufrad (3) und die Antriebswelle (6) und das Bohrwerkzeug (4, 5) mit derselben Drehzahl rotieren und
das Gehäuse (2) einen Durchmesser von etwa 2,5 cm bis etwa 15 cm und/oder eine Länge von etwa 3 cm bis etwa 15 cm aufweist, wobei
das Turbinenlaufrad (3) offen am Gehäuse (2) angeordnet ist, das heißt in radialer Richtung nicht von einer Gehäusewandung umschlossen wird.

2. Bohrturbine nach Anspruch 1, **dadurch gekennzeichnet, dass** diese als Gleichdruckturbine ausgelegt ist und/oder
dass das Gehäuse (2) mit einer Mehrzahl von Führungskufen (20) versehen ist.

3. Bohrturbine nach Anspruch 1 oder 2, **dadurch gekennzeichnet, dass** das Gehäuse (2) eine einzige Zufuhrleitung (9) aufweist, welche mit einem Schlauchanschluss (8) versehen ist, wobei die einzige Zufuhrleitung (9) im Gehäuse (2) in eine Mehrzahl von Unterzufuhrleitungen (10) aufgeteilt ist.

4. Bohrturbine nach Anspruch 3, **dadurch gekennzeichnet, dass** die Unterzufuhrleitung (10, 102) an zumindest eine Antriebsleitung (12) angeschlossen ist und/oder
dass die Unterzufuhrleitung (10) an zumindest eine Rückschubleitung (11) angeschlossen ist.

5. Bohrturbine nach einem der Ansprüche 1 oder 2, **dadurch gekennzeichnet, dass** das Gehäuse (2) zumindest eine erste Zufuhrleitung (91) und zumindest eine zweite Zufuhrleitung (92) aufweist.

6. Bohrturbine nach Anspruch 5, **dadurch gekennzeichnet, dass** die zweite Zufuhrleitung (92) im Gehäuse (2) in eine Mehrzahl von Unterzufuhrleitungen (102) aufgeteilt ist und/oder
dass die erste Zufuhrleitung (91) mittels zumindest eines Überströmkanals (101) an zumindest eine Rückschubleitung (11) angeschlossen ist.

7. Bohrturbine nach einem der Ansprüche 4 oder 6, **dadurch gekennzeichnet, dass** die Rückschubleitung (11) an zumindest einer Rückschuböffnung (18) mündet, welche an dem dem Bohrwerkzeug (4, 5) entgegengesetzten Ende des Gehäuses (2) angeordnet ist.

8. Bohrturbine nach einem der Ansprüche 1 bis 7, **dadurch gekennzeichnet, dass** die Antriebsleitung (12) zumindest einen Längsabschnitt (125) aufweist, welcher zur Längsachse der Bohrturbine (1) einen Winkel von etwa 20° bis etwa 70° oder von etwa 30° bis etwa 60° oder von etwa 45° einschließt oder
dass das Turbinenlaufrad (3) eine Mehrzahl von Prallelementen (21) aufweist, welche jeweils eine Prallfläche (22) besitzen und die Antriebsleitung (12) zumindest einen Längsabschnitt (125) aufweist, welcher in etwa parallel zum Normalenvektor der Prallfläche (22) verläuft.

9. Bohrturbine nach einem der Ansprüche 1 bis 8, **dadurch gekennzeichnet, dass** das Turbinenlaufrad (3) und/oder ein Spannwerkzeug (23) und/oder das Bohrwerkzeug (4, 5) eine Unwucht aufweist.

10. Bohrturbine nach einem der Ansprüche 1 bis 9, **dadurch gekennzeichnet, dass** das Gehäuse (2) einen Durchmesser von etwa 3 cm bis etwa 7,5 cm oder von etwa 2,5 cm bis etwa 4,5 cm aufweist und/oder
dass das Gehäuse (2) eine Länge von etwa 3 cm bis etwa 7 cm oder von etwa 4 cm bis etwa 6 cm aufweist.

11. Verfahren zum Richtbohren, mit folgenden Schritten:
Bereitstellen einer Bohrturbine (1) mit einem Gehäuse (2), in welchem eine Antriebswelle (6) drehbar gelagert ist, und mit einem Turbinenlaufrad (3), welches dazu eingerichtet ist, die Antriebswelle (6) in Rotation zu versetzen, wobei die Antriebswelle (6) mit einem Bohrwerkzeug (4, 5) verbunden und das Turbinenlaufrad (3) offen am Gehäuse (2) angeordnet ist, das heißt in radialer Richtung nicht von einer Gehäusewandung umschlossen wird;
Bereitstellen eines Ablenkschuhs (29) mit einer ersten Bohrung (31) und einer zweiten Bohrung (32) und einer die Bohrungen (31, 32) verbindenden Ablenkdurchführung (30);
Absenken des Ablenkschuhs in eine Bohrlochverrohrung (33) ;
Einführen der Bohrturbine (1) in die erste Bohrung (31) des Ablenkschuhs (29), so dass diese aus der zweiten Bohrung (32) austritt;
Zuführen eines Antriebsfluides über zumindest eine Antriebsleitung (9, 12), welches über zumindest eine Antriebsmündung (19) austritt und auf das Turbinenlaufrad (3) gelenkt wird, wobei
das Turbinenlaufrad (3) und die Antriebswelle (6) und das Bohrwerkzeug (4, 5) mit derselben Drehzahl rotieren.

12. Verfahren nach Anspruch 11, **dadurch gekennzeichnet, dass** das Antriebsfluid ein inkompressibles Fluid ist und/oder dass das Antriebsfluid Wasser enthält oder daraus besteht und/oder
dass das Antriebsfluid mit einem Druck von etwa 100 bar bis etwa 200 bar oder von etwa 100 bar bis etwa 160 bar zugeführt wird und/oder
dass das Antriebsfluid mit einem Durchfluss von etwa 100 l/min bis etwa 300 l/min oder von etwa 150 l/min bis etwa 250 l/min zugeführt wird und/oder
dass das Antriebsfluid über eine Zuleitung zugeführt wird, welche einen ersten Längsabschnitt mit einem ersten Durchmesser aufweist und einen zweiten Längsabschnitt mit einem zweiten Durchmesser, wobei der erste Durchmesser größer ist als der zweite Durchmesser und/oder
dass das aus der Bohrturbine austretende Antriebsfluid aufgefangen, von Bohrklein und Verunreinigungen gereinigt und über eine Pumpe erneut als Antriebsfluid der Bohrturbine zugeführt wird.

13. Verfahren nach einem der Ansprüche 11 oder 12, **dadurch gekennzeichnet, dass** zumindest ein Teil des Antriebsfluides auf der dem Bohrwerkzeug (4, 5) abgewandten Seite der Bohrturbine (1) austritt und/oder
dass ein Teil des Antriebsfluides zur Schmierung und/oder Kühlung des Bohrwerkzeuges (4, 5) verwendet wird.

14. Verfahren nach einem der Ansprüche 11 bis 13, **dadurch gekennzeichnet, dass** die Antriebswelle (6) und das Bohrwerkzeug (4, 5) mit einer Drehzahl von etwa 15.000 min⁻¹ bis etwa 35.000 min⁻¹ oder von etwa 20.000 min⁻¹ bis etwa 30.000 min⁻¹ rotiert und/oder
dass an der Antriebswelle (6) und dem Bohrwerkzeug (4, 5) ein Drehmoment von etwa 0,5 Nm bis etwa 5 Nm oder von etwa 1,5 Nm bis etwa 2,5 Nm erzeugt wird.

15. Verfahren nach einem der Ansprüche 11 bis 14, **dadurch gekennzeichnet, dass** das Turbinenlaufrad (3) und/oder das Spannwerkzeug (23) und/oder das Bohrwerkzeug (4, 5) eine Unwucht aufweist.

## Claims

1. Drilling turbine (1) comprising
a housing (2), in which a drive shaft (6) is rotatably mounted, and comprising
a turbine impeller (3) which is designed to set the drive shaft (6) in rotation, the drive shaft (6) being connectable to a drilling tool (4, 5), and
the housing having at least one drive line (9, 12) with at least one drive mouth (19), through which a drive fluid can be directed onto the turbine impeller (3),
**characterized in that**
the turbine impeller (3) is directly connected to the drive shaft (6) so that, during operation, the turbine impeller (3) and the drive shaft (6) and the drilling tool (4, 5) rotate at the same rotational speed, and the housing (2) has a diameter of about 2.5 cm to about 15 cm and/or a length of about 3 cm to about 15 cm,
the turbine impeller (3) being arranged on the housing (2) in open fashion, which means that the turbine is not enclosed by a housing wall in a radial direction.

2. Drilling turbine according to claim 1, **characterized in that** this turbine is designed as a constant pressure turbine and/or
**in that** the housing (2) is provided with a plurality of guide skids (20).

3. Drilling turbine according to claim 1 or 2, **characterized in that** the housing (2) has a single supply line (9), which is provided with a hose connection (8), the single supply line (9) in the housing (2) being divided into a plurality of sub-supply lines (10).

4. Drilling turbine according to claim 3, **characterized in that** the sub-supply line (10, 102) is connected to at least one drive line (12) and/or in that the sub-supply line (10) is connected to at least one return line (11).

5. Drilling turbine according to any one of claims 1 or 2, **characterized in that** the housing (2) has at least one first supply line (91) and at least one second supply line (92).

6. Drilling turbine according to claim 5, **characterized in that** the second supply line (92) in the housing (2) is divided into a plurality of sub-supply lines (102) and/or
**in that** the first supply line (91) is connected to at least one return line (11) by means of at least one overflow channel (101).

7. Drilling turbine according to any one of claims 4 or 6, **characterized in that** the return line (11) opens at least at one return opening (18), which is arranged at the end of the housing (2) opposite the drilling tool (4, 5).

8. Drilling turbine according to any one of claims 1 to 7, **characterized in that** the drive line (12) has at least one longitudinal portion (125), which includes an angle of about 20° to about 70° or of about 30° to about 60° or of about 45° with respect to the longitudinal axis of the drilling turbine (1), or
**in that** the turbine impeller (3) has a plurality of baffle elements (21), each of which has a baffle surface (22), and the drive line (12) has at least one longitudinal portion (125), which runs approximately parallel to the normal vector of the baffle surface (22).

9. Drilling turbine according to any one of claims 1 to 8, **characterized in that** the turbine impeller (3) and/or a clamping tool (23) and/or the drilling tool (4, 5) has an imbalance.

10. Drilling turbine according to any one of claims 1 to 9, **characterized in that** the housing (2) has a diameter of about 3 cm to about 7.5 cm or of about 2.5 cm to about 4.5 cm, and/or
**in that** the housing (2) has a length of about 3 cm to about 7 cm or of about 4 cm to about 6 cm.

11. Method for directional drilling, comprising the following steps:
providing a drilling turbine (1) comprising a housing (2), in which a drive shaft (6) is rotatably mounted, and comprising a turbine impeller (3), which is designed to set the drive shaft (6) in rotation, the drive shaft (6) being connected to a drilling tool (4, 5) and the turbine impeller (3) being arranged in the housing (2) in an open fashion, which means that the turbine impeller is not enclosed by a housing wall in a radial direction;
providing a deflection shoe (29) having a first hole (31) and a second hole (32) and a deflection passage (30) connecting the holes (31, 32);
lowering the deflection shoe into a drill hole casing (33);
inserting the drilling turbine (1) into the first hole (31) of the deflection shoe (29) so that it emerges from the second hole (32);
supplying a drive fluid via at least one drive line (9, 12), which emerges via at least one drive mouth (19) and is directed onto the turbine impeller (3), wherein
the turbine impeller (3) and the drive shaft (6) and the drilling tool (4, 5) rotate at the same rotational speed.

12. Method according to claim 11, **characterized in that** the drive fluid is an incompressible fluid and/or
**in that** the drive fluid contains, or consists of, water and/or
**in that** the drive fluid is supplied at a pressure of about 100 bar to about 200 bar or of about 100 bar to about 160 bar and/or
**in that** the drive fluid is supplied at a flow rate of about 100 l/min to about 300 l/min or of about 150 l/min to about 250 l/min and/or
**in that** the drive fluid is supplied via a supply line which has a first longitudinal portion having a first diameter and a second longitudinal portion having a second diameter, the first diameter being larger than the second diameter and/or
**in that** the drive fluid exiting the drilling turbine is collected, cleaned of drill hole cuttings and impurities, and supplied back to the drilling turbine as drive fluid via a pump.

13. Method according to any one of claims 11 or 12, **characterized in that** at least part of the drive fluid exits on the side of the drilling turbine (1) facing away from the drilling tool (4, 5), and/or
**in that** part of the drive fluid is used for lubricating and/or cooling the drilling tool (4, 5).

14. Method according to any one of claims 11 to 13, **characterized in that** the drive shaft (6) and the drilling tool (4, 5) rotate at a rotational speed of about 15,000 min⁻¹ to about 35,000 min⁻¹ or of about 20,000 min⁻¹ to about 30,000 min⁻¹, and/or
**in that** a torque of about 0.5 Nm to about 5 Nm or of about 1.5 Nm to about 2.5 Nm is generated at the drive shaft (6) and the drilling tool (4, 5).

15. Method according to any one of claims 11 to 14, **characterized in that** the turbine impeller (3) and/or the clamping tool (23) and/or the drilling tool (4, 5) has an imbalance.

## Revendications

1. Turbine de forage (1), comprenant
un carter (2) dans lequel un arbre d'entraînement (6) est monté de façon mobile en rotation, et
un rotor de turbine (3) conçu pour mettre en rotation l'arbre d'entraînement (6), l'arbre d'entraînement (6) pouvant être relié à un outil de forage (4, 5), et le carter présentant au moins une conduite d'entraînement (9, 12) avec au moins une embouchure d'entraînement (19), par laquelle un fluide d'entraînement peut être dirigé sur le rotor de turbine (3),
**caractérisée en ce que** le rotor de turbine (3) est directement relié à l'arbre d'entraînement (6), de sorte qu'en fonctionnement, le rotor de turbine (3) et l'arbre d'entraînement (6) et l'outil de forage (4, 5) tournent à la même vitesse de rotation, et
le carter (2) présente un diamètre d'environ 2,5 cm à environ 15 cm et/ou une longueur d'environ 3 cm à environ 15 cm,
le rotor de turbine (3) est disposé de manière ouverte sur le carter (2), c'est-à-dire qu'il n'est pas entouré par une paroi du carter dans la direction radiale.

2. Turbine de forage selon la revendication 1,
**caractérisée en ce qu'**elle est conçue comme une turbine à pression constante, et/ou
**en ce que** le carter (2) est pourvu d'une pluralité de patins de guidage (20).

3. Turbine de forage selon la revendication 1 ou 2,
**caractérisée en ce que** le carter (2) comprend une conduite d'alimentation unique (9) munie d'un raccord de tuyau flexible (8), la conduite d'alimentation unique (9) dans le carter (2) étant subdivisée en une pluralité de conduites d'alimentation secondaires (10).

4. Turbine de forage selon la revendication 3,
**caractérisée en ce que** la conduite d'alimentation secondaire (10, 102) est raccordée à au moins une conduite d'entraînement (12), et/ou
**en ce que** la conduite d'alimentation secondaire (10) est raccordée à au moins une conduite de recul (11).

5. Turbine de forage selon l'une des revendications 1 ou 2,
**caractérisée en ce que** le carter (2) comprend au moins une première conduite d'alimentation (91) et au moins une deuxième conduite d'alimentation (92).

6. Turbine de forage selon la revendication 5,
**caractérisée en ce que** la deuxième conduite d'alimentation (92) dans le carter (2) est subdivisée en une pluralité de conduites d'alimentation secondaires (102), et/ou
**en ce que** la première conduite d'alimentation (91) est raccordée à au moins une conduite de recul (11) au moyen d'au moins un canal de décharge (101).

7. Turbine de forage selon l'une des revendications 4 ou 6,
**caractérisée en ce que** la conduite de recul (11) débouche sur au moins un orifice de recul (18) situé à l'extrémité du carter (2) opposée à l'outil de forage (4, 5).

8. Turbine de forage selon l'une des revendications 1 à 7,
**caractérisée en ce que** la conduite d'entraînement (12) présente au moins un tronçon longitudinal (125) qui forme un angle d'environ 20° à environ 70° ou d'environ 30° à environ 60° ou d'environ 45° par rapport à l'axe longitudinal de la turbine de forage (1), ou
**en ce que** le rotor de turbine (3) présente une pluralité d'éléments d'impact (21) qui présentent chacun une surface d'impact (22), et la conduite d'entraînement (12) présente au moins un tronçon longitudinal (125) qui s'étend approximativement parallèlement au vecteur normal de la surface d'impact (22).

9. Turbine de forage selon l'une des revendications 1 à 8,
**caractérisée en ce que**
le rotor de turbine (3) et/ou un outil de serrage (23) et/ou l'outil de forage (4, 5) présente(nt) un balourd.

10. Turbine de forage selon l'une des revendications 1 à 9,
**caractérisée en ce que** le carter (2) présente un diamètre d'environ 3 cm à environ 7,5 cm ou d'environ 2,5 cm à environ 4,5 cm, et/ou
le carter (2) présente une longueur d'environ 3 cm à environ 7 cm ou d'environ 4 cm à environ 6 cm.

11. Procédé de forage dirigé, comprenant les étapes suivantes consistant à :
fournir une turbine de forage (1) comprenant un carter (2), dans lequel un arbre d'entraînement (6) est monté de façon mobile en rotation, et un rotor de turbine (3) conçu pour mettre en rotation l'arbre d'entraînement (6), l'arbre d'entraînement (6) étant relié à un outil de forage (4, 5), et le rotor de turbine (3) étant disposé de manière ouverte sur le carter (2), c'est-à-dire n'étant pas entouré par une paroi du carter dans la direction radiale ;
fournir un sabot de déviation (29) ayant un premier alésage (31) et un deuxième alésage (32) et un passage de déviation (30) reliant les alésages (31, 32) ;
abaisser le sabot de déviation dans un tubage de puits (33) ;
introduire la turbine de forage (1) dans le premier alésage (31) du sabot de déviation (29) de manière à ce qu'elle sorte du deuxième alésage (32) ;
alimenter un fluide d'entraînement par au moins une conduite d'entraînement (9, 12), qui sort par au moins une embouchure d'entraînement (19) et est dirigé sur le rotor de turbine (3), le rotor de turbine (3) et l'arbre d'entraînement (6) et l'outil de forage (4, 5) tournant à la même vitesse de rotation.

12. Procédé selon la revendication 11,
**caractérisé en ce que** le fluide d'entraînement est un fluide incompressible, et/ou
**en ce que** le fluide d'entraînement contient ou est constitué d'eau, et/ou
**en ce que** le fluide d'entraînement est alimenté à une pression d'environ 100 bars à environ 200 bars ou d'environ 100 bars à environ 160 bars, et/ou
**en ce que** le fluide d'entraînement est alimenté à un débit d'environ 100 l/min à environ 300 l/min ou d'environ 150 l/min à environ 250 l/min, et/ou
**en ce que** le fluide d'entraînement est alimenté par l'intermédiaire d'une conduite d'alimentation qui comprend un premier tronçon longitudinal ayant un premier diamètre et un deuxième tronçon longitudinal ayant un deuxième diamètre, le premier diamètre étant supérieur au deuxième diamètre, et/ou
**en ce que** le fluide d'entraînement sortant de la turbine de forage est récupéré, purifié vis-à-vis des débris de forage et des encrassements, et réalimenté, à titre de fluide d'entraînement, vers la turbine de forage par une pompe.

13. Procédé selon l'une des revendications 11 ou 12,
**caractérisé en ce qu'**au moins une partie du fluide d'entraînement sort du côté de la turbine de forage (1) détourné de l'outil de forage (4, 5), et/ou
**en ce qu'**une partie du fluide d'entraînement est utilisée pour la lubrification et/ou le refroidissement de l'outil de forage (4, 5).

14. Procédé selon l'une des revendications 11 à 13,
**caractérisé en ce que** l'arbre d'entraînement (6) et l'outil de forage (4, 5) tournent à une vitesse de rotation d'environ 15 000 min⁻¹ à environ 35 000 min⁻¹ ou d'environ 20 000 min⁻¹ à environ 30 000 min⁻¹, et/ou
**en ce qu'**un couple d'environ 0,5 Nm à environ 5 Nm ou d'environ 1,5 Nm à environ 2,5 Nm est généré au niveau de l'arbre d'entraînement (6) et de l'outil de forage (4, 5).

15. Procédé selon l'une des revendications 11 à 14,
**caractérisé en ce que** le rotor de turbine (3) et/ou l'outil de serrage (23) et/ou l'outil de forage (4, 5) présente(nt) un balourd.
